# EUROPÄISCHE PATENTSCHRIFT

(11) **EP 1 141 081 B1**
(45) Veröffentlichungstag und Bekanntmachung des Hinweises auf die Patenterteilung: **24.05.2006**
(21) Anmeldenummer: 99965447.8
(22) Anmeldetag: 10.12.1999
(51) Int. Cl.: C08G 64/24, G11B 7/24

(54) **POLYCARBONATE MIT NIEDRIGEM YELLOWNESS-INDEX**
POLYCARBONATES WITH A LOW YELLOWNESS INDEX
POLYCARBONATES A FAIBLE INDICE DE JAUNE

(30) Priorität: 23.12.1998 DE 19859690; 23.12.1998 DE 19859692; 04.02.1999 DE 19904408
(43) Veröffentlichungstag der Anmeldung: 10.10.2001
(73) Patentinhaber: Bayer MaterialScience AG, 51368 Leverkusen (DE)
(72) Erfinder: KÜHLING, Steffen, B-9100 Sint Niklaas (BE); LANZE, Rolf, D-47804 Krefeld (DE); PREIN, Michael, D-47802 Krefeld (DE); NEUMANN, Rainer, D-47803 Krefeld (DE); KAUTH, Hermann, D-47803 Krefeld (DE); KORDS, Christian, D-47829 Krefeld (DE); HEYDENREICH, Frieder, D-40593 Düsseldorf (DE); VAN OSSELAER, Tony, D-47800 Krefeld (DE); HAESE, Wilfried, D-51519 Odenthal (DE)
(86) Internationale Anmeldenummer: PCT/EP1999/009774
(87) Internationale Veröffentlichungsnummer: WO 2000/039191

(56) Entgegenhaltungen:
- DE-A- 2 439 552
- US-A- 5 633 060
- DATABASE WPI Section Ch, Week 199403 Derwent Publications Ltd., London, GB; Class A23, AN 1994-022980 XP002135668 & JP 05 331277 A (TEIJIN CHEM LTD), 14. Dezember 1993 (1993-12-14)

## Beschreibung

Die vorliegende Erfindung betrifft nach dem Phasengrenzflächenprozeß erhältliche Polycarbonate mit niedrigem Yellowness-Index (YI) und hoher Transmission (TD), ein Verfahren zu deren Herstellung, bei dem Natriumbisphenolat-Lösungen mit einem Gehalt an gelöstem Sauerstoff <150 ppb eingesetzt werden, ein Verfahren zur Herstellung solcher Natriumbisphenolat-Lösungen, sowie Substrate für optische Datenspeicher mit verbesserter Transmission im blauen Spektralbereich.

Die Synthese von Polycarbonaten über den Phasengrenzflächenprozeß ist bekannt. Dabei wird angestrebt, möglichst farblose Polycarbonate mit hoher Transmission herzustellen. Ein Maß für die Eigenfärbung des Polycarbonats ist der Yellowness-Index (YI), ein Maß für die Lichtdurchlässigkeit der Transmissionswert (TD). Aufgabe der Erfindung war es, Polycarbonate mit möglichst niedrigem YI und hoher TD bereitzustellen.

Es wurde nun gefunden, daß solche Polycarbonate erhalten werden können, wenn zu ihrer Herstellung Natriumbisphenolat-Lösungen mit einem Gehalt an gelöstem Sauerstoff <150 ppb. bevorzugt <100 ppb, besonders bevorzugt <50 ppb eingesetzt werden.

Gegenstand der Erfindung sind daher Polycarbonate, erhältlich durch Umsetzung von Phosgen mit einer Natriumbisphenolat-Lösung mit einem Gehalt an gelöstem Sauerstoff <150 ppb, bevorzugt <100 ppb, besonders bevorzugt <50 ppb, nach dem Phasengrenzflächenverfahren, wie es beispielsweise in DE-OS 42 27 372 beschrieben ist, unter Sauerstoffausschluß. In der Reaktionskessel und Rohrreaktor umfassenden Konfigurationsschleife sind Umpumpschleife und Rohrreaktoren geflutet und der Reaktionskessel mit Stickstoff überlagert, so daß Sauerstoffausschluß gewährleistet wird.

Diese Polycarbonate sind besonders geeignet zur Herstellung optischer Datenspeicher, beispielsweise von compact disks (CD), magneto-optischen disks (MOD) oder DVD, die mit kurzwelligem Laserlicht (< 500 nm, bevorzugt 400 bis 450 nm) beschrieben oder gelesen werden.

Gegenstand der Erfindung ist auch ein Verfahren zur Herstellung solcher Polycarbonate nach dem Phasengrenzflächenverfahren, bei dem Phosgen mit einer Natriumbisphenolat-Lösung mit einem Gehalt an gelöstem Sauerstoff <150 ppb, bevorzugt <100 ppb, besonders bevorzugt <50 ppb unter Sauerstoffausschluß umgesetzt wird.

Gegenstand der Erfindung ist weiterhin ein Verfahren zur Herstellung von Natriumbisphenolat-Lösungen mit einem Gehalt an gelöstem Sauerstoff <150 ppb, bevorzugt <100 ppb, besonders bevorzugt <50 ppb, bei dem Bisphenole mit einem Gehalt an gelöstem Sauerstoff <10 ppb mit einer wäßrigen NaOH-Lösung mit einem Gehalt an gelöstem Sauerstoff <100 ppb unter Sauerstoffausschluß umgesetzt werden.

Erfindungsgemäß einsetzbare Bisphenole sind solche, die erhältlich sind durch Umsetzung von aromatischen Hydroxyverbindungen, die in p-Position nicht substituiert sind und keine Substituenten zweiter Ordnung wie Cyano-, Carboxy- oder Nitrogruppen enthalten, beispielsweise Phenol, o- und m-Kresol, 2,6-Dimethylphenol, o-tert.-Butylphenol, 2-Methyl-6-tert.-Butylphenol, o-Cyclohexylphenol, o-Phenylphenol, o-Isopropylphenol, 2-Methyl-6-cyclopentyl-phenol, o- und m-Chlorphenol, 2,3,6-Trimethylphenol, bevorzugt Phenol, o- und m-Kresol, 2,6-Dimethylphenol, o-tert.-Butylphenol und o-Phenyl-phenol; besonders bevorzugt Phenol, und Ketonen mit wenigstens einer aliphatischen Gruppe an der Carbonylfunktion, beispielsweise Aceton, Methylethylketon, Methylpropylketon, Methylisopropylketon, Diethylketon, Acetophenon, Cyclohexanon, Cyclopentanon, Methyl-, Dimethyl- und Trimethylcyclohexanonen, die auch geminale Methylgruppen aufweisen können, z.B. 3,3-Dimethyl-5-methylcyclohexanon (Hydroisophoron), bevorzugt Aceton, Acetophenon, Cyclohexanon und dessen Methylgruppen tragende Homologe; besonders bevorzugt Aceton.

Durch intensive Stickstoffinertisierung beim Herstellungsprozeß wird sichergestellt, daß der Restgehalt an gelöstem Sauerstoff in den Bisphenolen weniger als 10 ppb beträgt.

Die Bisphenole werden unter Sauerstoffausschluß (Stickstoff-Inertisierung) mit wäßrigen NaOH-Lösungen umgesetzt, die einem Gehalt an gelöstem Sauerstoff <100 ppb, bevorzugt <20 ppb aufweisen. Die Konzentration der wäßrigen NaOH wird bevorzugt so gewählt, daß die Konzentration der resultierenden Natriumbisphenolat-Lösung möglichst nahe an der Löslichkeitsgrenze liegt, d.h. im Bereich von 13 bis 16 Gew.-%, bevorzugt 14 bis 15,5 Gew.-%. Das Molverhältnis von NaOH zu Bisphenol beträgt 1,8:1 bis 2,5:1, bevorzugt 1,9:1 bis 2,4:1. besonders bevorzugt 2,0:1 bis 2,3:1. Das Bisphenol kann als Feststoff in der NaOH gelöst werden, bevorzugt wird es jedoch, ohne den festen Zustand durchlaufen zu haben, direkt als Schmelze der NaOH zugesetzt, so daß Lösungen mit einer Temperatur von 20°C bis 90°C, bevorzugt 30°C bis 70°C, erhalten werden.

Die zur Herstellung der Natriumbisphenolat-Lösung eingesetzte, nahezu sauerstoffreie wäßrige NaOH kann durch Elektrolyse hergestellt werden. Lagerung und Transport der NaOH nach der Herstellung müssen unter Inertgas erfolgen. Für den Einsatz im erfindungsgemäßen Verfahren wird die Konzentration der bei der Elektrolyse erhaltenen NaOH in der Regel durch Verdünnen mit nahezu sauerstofffreiem vollentsalztem Wasser (VE-Wasser) erniedrigt. Das VE-Wasser wird in im Prinzip bekannter Weise, z.B. katalytisch, durch Entgasen oder Strippen mit Inertgas von Sauerstoff befreit.

Die durch das erfindungsgemäße Verfahren hergestellten Natriumbisphenolat-Lösungen weisen besonders niedrige Farbzahlen auf, die naturgemäß auch abhängig sind von der Farbzahl des eingesetzten Bisphenols. Bei Verwendung eines Bisphenols mit einer Farbzahl <10 Hz lassen sich Farbzahlen von <1,5 Hz, bevorzugt <1,0 Hz erzielen.

Die nach dem erfindungsgemäßen Verfahren hergestellten Natriumbisphenolat-lösungen weisen darüber hinaus eine deutlich verbesserte Lagerstabilität auf. So zeigt eine über 3 Stunden bei 40°C unter Inertgasbedingungen gelagerte Natriumbisphenolatlösung, die einen Sauerstoffgehalt von 20 ppb aufweist, nur eine Farbzahlverschlechterung von 0,5 Hz, während bei einer Lösung mit einem Sauerstoffgehalt von 250 ppb eine Farbzahlverschlechterung von 3,5 Hz beobachtet wird.

Ein weiterer Gegenstand der Erfindung sind die mit den erfindungsgemäßen Polycarbonaten herstellbare Substrate für optische Datenspeicher sowie die aus den Substraten herstellbaren optischen Datenspeicher.

Um höhere Speicherdichten bei optischen Datenspeichern realisieren zu können, ist ein Ersatz der bislang verwendeten Schreib-Lesesysteme, die mit Licht im roten Spektralbereich arbeiten, durch solche, die Wellenlängen im blauen Spektralbereich, speziell von 400 bis 450 nm Wellenlänge verwenden, vorgesehen. Hierfür ist erforderlich, daß die zur Herstellung der optischen Datenspeicher eingesetzten Substrate eine möglichst hohe Transmission in diesem Wellenlängenbereich aufweisen. Dies ist entscheidend für ein gutes Signal-Rausch-Verhältnis und eine lange Lebensdauer des Datenträgers.

Es wurde nun gefunden, daß Substrate mit den gewünschten Eigenschaften hergestellt werden können aus Polycarbonat, welches unter Verwendung von Natriumbisphenolat-Lösungen mit einem Gehalt an gelöstem Sauerstoff <150 ppb, bevorzugt <100 ppb, besonders bevorzugt <50 ppb hergestellt wurde.

Gegenstand der Erfindung sind Substrate für optische Datenpeicher aus Polycarbonat, das erhältlich ist durch Umsetzung von Phosgen mit einer Natriumbisphenolat-Lösung mit einem Gehalt an gelöstem Sauerstoff <150 ppb, bevorzugt <100 ppb, besonders bevorzugt <50 ppb. nach dem Phasengrenzflächenverfahren, wie es beispielsweise in DE-OS 42 27 372 beschrieben ist, unter Sauerstoffausschluß.

Die erfindungsgemäßen Substrate können aus Homo- oder Copolycarbonaten hergestellt werden. Bevorzugt werden Bisphenol A-Polycarbonat oder Copolymere auf Grundlage von Bisphenol A und Bisphenol TMC oder Bisphenol M und Bisphenol TMC eingesetzt.

In der Reaktionskessel und Rohrreaktor umfassenden Konfigurationsschleife sind Umpumpschleife und Rohrreaktoren geflutet und der Reaktionskessel mit Stickstoff überlagert, so daß Sauerstoffausschluß gewährleistet wird.

Diese Substrate werden eingesetzt für die Herstellung optischer Datenspeicher, beispielsweise von compact disks (CD), magneto-optischen disks (MOD) oder digital versatile disks (DVD bzw. high-density DVD), die mit kurzwelligem Laserlicht (< 500 nm, bevorzugt 400 bis 450 nm) beschrieben und/oder gelesen werden. Gegenstand der Erfindung sind auch die aus den Substraten hergestellten optischen Datenspeicher, die aus den Substraten in dem Fachmann im Prinzip bekannter Weise hergestellt werden.

Bei der Herstellung des Polycarbonats für die erfindungsgemäßen Substrate werden Natriumbisphenolat-Lösungen mit einem Gehalt an gelöstem Sauerstoff <150 ppb, bevorzugt <100 ppb, besonders bevorzugt <50 ppb eingesetzt, die durch Umsetzung von Bisphenolen mit einem Gehalt an gelöstem Sauerstoff <10 ppb mit einer wäßrigen NaOH-Lösung mit einem Gehalt an gelöstem Sauerstoff <100 ppb unter Sauerstoffausschluß erhältlich sind.

Erfindungsgemäß einsetzbare Bisphenole sind solche, die erhältlich sind durch Umsetzung von aromatischen Hydroxyverbindungen, die in p-Position nicht substituiert sind und keine Substituenten zweiter Ordnung wie Cyano-, Carboxy- oder Nitrogruppen enthalten, beispielsweise Phenol, o- und m-Kresol, 2,6-Dimethylphenol, o-tert.-Butylphenol, 2-Methyl-6-tert.-Butylphenol, o-Cyclohexylphenol, o-Phenylphenol, o-Isopropylphenol, 2-Methyl-6-cyclopentyl-phenol, o- und m-Chlorphenol, 2,3,6-Trimethylphenol, bevorzugt Phenol, o- und m-Kresol, 2,6-Dimethylphenol, o-tert.-Butylphenol und o-Phenyl-phenol; besonders bevorzugt Phenol, und Ketonen mit wenigstens einer aliphatischen Gruppe an der Carbonylfunktion, beispielsweise Aceton, Methylethylketon, Methylpropylketon, Methylisopropylketon, Diethylketon, Acetophenon, Cyclohexanon, Cyclopentanon, Methyl-, Dimethyl- und Trimethylcyclohexanonen, die auch geminale Methylgruppen aufweisen können, z.B. 3,3,5-Trimethylcyclohexanon (Hydroisophoron), bevorzugt Aceton, Acetophenon, Cyclohexanon und dessen Methylgruppen tragende Homologe; besonders bevorzugt Aceton. Weiterhin kann als Bisphenol auch 1,3-Bis[1-(4-hydroxyphenyl)-1-methylethyl]benzol (Bisphenol M, CAS-No. 13595-25-0) eingesetzt werden. Dessen Herstellung ist beschrieben in US-PS 5,633,060. Durch intensive Stickstoffinertisierung beim Herstellungsprozeß wird sichergestellt, daß der Restgehalt an gelöstem Sauerstoff in den Bisphenolen weniger als 10 ppb beträgt.

Die Bisphenole werden unter Sauerstoffausschluß (Stickstoff-Inertisierung) mit wäßrigen NaOH-Lösungen umgesetzt, die einen Gehalt an gelöstem Sauerstoff <100 ppb, bevorzugt <20 ppb aufweisen. Die Konzentration der wäßrigen NaOH wird bevorzugt so gewählt, daß die Konzentration der resultierenden Natriumbisphenolat-Lösung möglichst nahe an der Löslichkeitsgrenze liegt, d.h. im Falle von Bisphenol A im Bereich von 13 bis 16 Gew.-%, bevorzugt 14 bis 15,5 Gew.-%. Das Molverhältnis von NaOH zu Bisphenol beträgt 1,8:1 bis 2,5:1, bevorzugt 1,9:1 bis 2,4:1, besonders bevorzugt 2,0:1 bis 2,3:1. Das Bisphenol kann als Feststoff in der NaOH gelöst werden, bevorzugt wird es jedoch, ohne den festen Zustand durchlaufen zu haben, direkt als Schmelze bei Temperaturen von 20°C bis 90°C, bevorzugt 30°C bis 70°C, der NaOH zugesetzt. Es können selbstverständlich auch Mischungen unterschiedlicher Bisphenole eingesetzt werden, beispielsweise Mischungen von Bisphenol A und Bisphenol TMC (1,1-Bis[4-hydroxyphenyl]-3,3,5-triniethylcyclohexan).

Die zur Herstellung der Natriumbisphenolat-Lösung eingesetzte, nahezu sauerstofffreie wäßrige NaOH kann durch Elektrolyse hergestellt werden. Lagerung und Transport der NaOH nach der Herstellung müssen unter Inertgas erfolgen. Für den Einsatz im erfindungsgemäßen Verfahren wird die Konzentration der bei der Elektrolyse erhaltenen NaOH in der Regel durch Verdünnen mit nahezu sauerstofffreiem vollentsalztem Wasser (VE-Wasser) erniedrigt. Das VE-Wasser wird in im Prinzip bekannter Weise, z.B. katalytisch, durch Entgasen oder Strippen mit Inertgas von Sauerstoff befreit.

Die so erhaltenen Natriumbisphenolat-Lösungen weisen besonders niedrige Farbzahlen auf, die naturgemäß auch abhängig sind von der Farbzahl des eingesetzten Bisphenols. Bei Verwendung eines Bisphenols mit einer Farbzahl <10 Hz lassen sich Farbzahlen von <1,5 Hz, bevorzugt <1,0 Hz erzielen.

### Beispiele

Die Bestimmung der Farbzahlen erfolgte nach ASTM D 1686 durch Messung der Absorption bis 400 nm bei einer Durchstrahlungsstrecke von 50 cm. Der yellowness index YI wurde nach ASTM D 1925, die Transmission nach ASTM D 1003 gemessen. Die relative Lösungsviskosität wurde an einer 5g Polymer/l enthaltenden Lösung in Dichlormethan bei 25°C bestimmt.

### Beispiel 1

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengebracht. Der gesamte Prozeß ist mit Stickstoff inertisiert. Die 6,5 %ige NaOH weist einen Sauerstoffgehalt von 10 ppb auf. Die Hazen-Farbzahl der resultierenden 15 %igen wäßrigen NaBPA beträgt 0,5 Hz. Diese NaBPA-Lösung wird zur Herstellung von Polycarbonat nach dem Phasengrenzflächenprozeß eingesetzt. Der YI (yellowness index) des resultierenden Polycarbonats mit einer relativen Lösungsviskosität von 1,200 beträgt 1,45.

### Beispiel 2

Die in Beispiel 1 erhaltene NaBPA-Lösung wird zur Herstellung eines Polycarbonats mit einer relativen Lösungsviskosität von 1,315 nach dem Phasengrenzflächenprozeß eingesetzt. Der YI (yellowness index) des resultierenden Polycarbonats beträgt 2,2.

### Beispiel 3

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengebracht. Der gesamte Prozeß ist mit Stickstoff inertisiert. Die 6.5 %ige NaOH weist einen Sauerstoffgehalt von 100 ppb auf. Die Hazen-Farbzahl der resultierenden 15 %igen wäßrigen NaBPA beträgt 1,3 Hz. Diese NaBPA-Lösung wird zur Herstellung von Polycarbonat nach dem Phasengrenzflächenprozeß eingesetzt. Der YI (yellowness index) des resultierenden Polycarbonats mit einer relativen Lösungsviskosität von 1,200 beträgt 1,75.

### Beispiel 4

Die in Beispiel 3 erhaltene NaBPA-Lösung wird zur Herstellung eines Polycarbonats mit einer relativen Lösungsviskosität von 1,315 nach dem Phasengrenzflächenprozeß eingesetzt. Der YI (yellowness index) des resultierenden Polycarbonats beträgt 2,5.

### Vesgleichsbeispiel 5

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengebracht. Der gesamte Prozeß ist mit Stickstoff inertisiert. Die 6,5 %ige NaOH weist einen Sauerstoffgehalt von 150 ppb auf. Die Hazen-Farbzahl der resultierenden 15 %igen wäßrigen NaBPA beträgt 1,9 Hz. Diese NaBPA-Lösung wird zur Herstellung von Polycarbonat nach dem Phasengrenzflächenprozeß eingesetzt. Der YI (yellowness index) des resultierenden Polycarbonats mit einer relativen Lösungsviskosität von 1,200 beträgt 1,85.

### Vesgleichsbeispiel 6

Die in Beispiel 5 erhaltene NaBPA-Lösung wird zur Herstellung eines Polycarbonats mit einer relativen Lösungsviskosität von 1,315 nach dem Phasengrenzflächenprozeß eingesetzt. Der YI (yellowness index) des resultierenden Polycarbonats beträgt 2,7.

### Vergleichsbeispiel 7

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengebracht. Der gesamte Prozeß ist mit Stickstoff inertisiert. Die 6,5 %ige NaOH weist einen Sauerstoffgehalt von 200 ppb auf. Die Hazen-Farbzahl der resultierenden 15 %igen wäßrigen NaBPA beträgt 1,9 Hz. Diese NaBPA-Lösung wird zur Herstellung von Polycarbonat nach dem Phasengrenzflächenprozeß eingesetzt. Der YI (yellowness index) des resultierenden Polycarbonats mit einer relativen Lösungsviskosität von 1,200 beträgt 1,9.

### Vergleichsbeispiel 8

Die in Vergleichsbeispiel 7 erhaltene NaBPA-Lösung wird zur Herstellung eines Polycarbonats mit einer relativen Lösungsviskosität von 1,315 nach dem Phasengrenzflächenprozeß eingesetzt. Der YI (yellowness index) des resultierenden Polycarbonats beträgt 2,8.

### Vergleichsbeispiel 9

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengbracht. Der gesamte Prozeß ist mit Stickstoff inertisiert. Die 6,5 %ige NaOH weist einen Sauerstoffgehalt von 250 ppb auf. Die Hazen-Farbzahl der resultierenden 15 %igen wäßrigen NaBPA beträgt 2 Hz. Diese NaBPA-Lösung wird zur Herstellung von Polycarbonat nach dem Phasengrenzflächenprozeß eingesetzt. Der YI (yellowness index) des resultierenden Polycarbonats mit einer relativen Lösungsviskosität von 1,200 beträgt 1,90.

### Vergleichsbeispiel 10

Die in Vergleichsbeispiel 9 erhaltene NaBPA-Lösung wird zur Herstellung eines Polycarbonats mit einer relativen Lösungsviskosität von 1,315 nach dem Phasengrenzflächenprozeß eingesetzt. Der YI (yellowness index) des resultierenden Polycarbonats beträgt 2,8.

### Beispiel 11

Die in Beispiel 1 erhaltene NaBPA-Lösung wird zur Herstellung eines durch Zusatz weniger ppm blauer oder violetter organischer Farbstoffe gebläuten Polycarbonats mit einer relativen Lösungsviskosität von 1,297 nach dem Phasengrenzflächenprozeß eingesetzt. Die Lichtdurchlässigkeit (Transmission, ASTM D 1003) des resultierenden Polycarbonats beträgt 87,95%.

### Beispiel 12

Die in Beispiel 3 erhaltene NaBPA-Lösung wird zur Herstellung eines gebläuten Polycarbonats (Zusatz identischer Mengen und Farbstoffe wie in Beispiel 11) mit einer relativen Lösungsviskosität von 1,297 nach dem Phasengrenzflächenprozeß eingesetzt. Die Lichtdurchlässigkeit (Transmission, ASTM D 1003) des resultierenden Polycarbonats beträgt 87,66%.

### Vergleichsbeispiel 13

Die in Beispiel 5 erhaltene NaBPA-Lösung wird zur Herstellung eines gebläuten Polycarbonats (Zusatz identischer Mengen und Farbstoffe wie in Beispiel 11) mit einer relativen Lösungsviskosität von 1,297 nach dem Phasengrenzflächenprozeß eingesetzt. Die Lichtdurchlässigkeit (Transmission, ASTM D 1003) des resultierenden Polycarbonats beträgt 87,43%.

### Vergleichsbeispiel 14

Die in Vergleichsbeispiel 7 erhaltene NaBPA-Lösung wird zur Herstellung eines gebläuten Polycarbonats (Zusatz identischer Mengen und Farbstoffe wie in Beispiel 11) mit einer relativen Lösungsviskosität von 1,297 nach dem Phasengrenzflächenprozeß eingesetzt. Die Lichtdurchlässigkeit (Transmission, ASTM D 1003) des resultierenden Polycarbonats beträgt 87,40%.

### Vergleichsbeispiel 15

Die in Vergleichsbeispiel 9 erhaltene NaBPA-Lösung wird zur Herstellung eines gebläuten Polycarbonats (Zusatz identischer Mengen und Farbstoffe wie in Beispiel 6) mit einer relativen Lösungsviskosität von 1,297 nach dem Phasengrenzflächenprozeß eingesetzt. Die Lichtdurchlässigkeit (Transmission, ASTM D 1003) des resultierenden Polycarbonats beträgt 87,32%.

Die Abhängigkeit der Farbzahl der NaBPA-Lösung sowie der Transparenz und des YI der daraus hergestellten Polycarbonate vom Sauerstoffgehalt sind in Fig. 1 wiedergegeben.

### Beispiel 16

Zur Herstellung von 1,272 t/h einer wäßrigen Lösung von Natriumbisphenolat und dem Dinatriumsalz des 1,1-Bis-(4-hydroxyphenyl)-3,3-dimethyl-5-methylcyclohexans (57mol%:43mol%) werden 79,35 kg/h 1,1-Bis-(4-hydroxyphenyl)-3,3-dimethyl-5-methylcyclohexan (wird vor dem Lösevorgang in einem Rührkessel durch fünfmaliges Evakuieren und Befüllen mit Stickstoff vom Restsauerstoff befreit) mit 487,4 kg/h 6,5%iger NaOH unter Sauerstoffausschluß aufgelöst und mit einer Lösung von 102,3 kg/h BPA (BPA wird als Schmelze kontinuierlich mit NaOH zusammengebracht) in 603,4 kg/h 6,5%iger NaOH unter Sauerstoffausschluß gemischt. Die eingesetzte 6,5%ige NaOH weist einen Sauerstoffgehalt von 10 ppb auf. Die Hazen-Farbzahl der resultierenden wäßrigen Natriumbisphenolatlösung beträgt 0,9 Hz.

Diese Na-Bisphenolat-Lösung wird zur Herstellung eines Copolycarbonats nach dem Phasengrenzflächenprozeß eingesetzt. Der Y.I. (yellowness index) des resultierenden Copolycarbonats mit einer relativen Lösungsviskosität von 1.295 beträgt 2,4.

### Beispiel 17

Zur Herstellung von 1,272 t/h einer wäßrigen Lösung von Natriumbisphenolat und dem Dinatriumsalz des 1,1-Bis-(4-hydroxyphenyl)-3,3-dimethyl-5-methylcyclohexans (57mol%:43mol%) werden 79,35 kg/h 1,1-Bis-(4-hydroxyphenyl)-3,3-dimethyl-5-methylcyclohexan (wird vor dem Lösevorgang in einem Rührkessel durch fünfmaliges Evakuieren und Befüllen mit Stickstoff vom Restsauerstoff befreit) mit 487,4 kg/h 6,5%iger NaOH unter Sauerstoffausschluß aufgelöst und mit einer Lösung von 102,3 kg/h BPA (BPA wird als Schmelze kontinuierlich mit NaOH zusammengebracht) in 603,4 kg/h 6,5%iger NaOH unter Sauerstoffausschluß gemischt. Die eingesetzte 6.5%ige NaOH weist einen Sauerstoffgehalt von 100 ppb auf. Die Hazen-Farbzahl der resultierenden wäßrigen Natriumbisphenolatlösung beträgt 1,2 Hz.

Diese Na-Bisphenolat-Lösung wird zur Herstellung eines Copolycarbonats nach dem Phasengrenzflächenprozeß eingesetzt. Der Y.I. (yellowness index) des resultierenden Copolycarbonats mit einer relativen Lösungsviskosität von 1.295 beträgt 2,7.

### Vergleichsbeispiel 18

Zur Herstellung von 1,272 t/h einer wäßrigen Lösung von Natriumbisphenolat und dem Dinatriumsalz des 1,1-Bis-(4-hydroxyphenyl)-3,3-dimethyl-5-methylcyclohexans (57mol%:43mol%) werden 79,35 kg/h 1,1-Bis-(4-hydroxyphenyl)-3,3-dimethyl-5-methylcyclohexan (wird vor dem Lösevorgang in einem Rührkessel durch fünfmaliges Evakuieren und Befüllen mit Stickstoff vom Restsauerstoff befreit) mit 487,4 kg/h 6,5%iger NaOH unter Sauerstoffausschluß aufgelöst und mit einer Lösung von 102,3 kg/h BPA (BPA wird als Schmelze kontinuierlich mit NaOH zusammengebracht) in 603,4 kg/h 6,5%iger NaOH unter Sauerstoffausschluß gemischt. Die eingesetzte 6,5%ige NaOH weist einen Sauerstoffgehalt von 250 ppb auf. Die Hazen-Farbzahl der resultierenden wäßrigen Natriumbisphenolatlösung beträgt 1,8 Hz. 250 ppb auf.

Diese Na-Bisphenolat-Lösung wird zur Herstellung eines Copolycarbonats nach dem Phasengrenzflächenprozeß eingesetzt. Der Y.I. (yellowness index) des resultierenden Copolycarbonats mit einer relativen Lösungsviskosität von 1.295 beträgt 3,4.

### Beispiel 19

Die in Beispiel 16 erhaltene Natriumbisphenolat-Lösung wird zur Herstellung eines durch Zusatz weniger ppm blauer oder violetter organischer Farbstoffe gebläuten Copolycarbonats mit einer relativen Lösungsviskosität von 1,293 nach dem Phasengrenzflächenprozeß eingesetzt. Die Lichtdurchlässigkeit (Transmission, ASTM D 1003) des resultierenden Polycarbonats beträgt 88,30%

### Beispiel 20

Analog Beispiel 19 wird die in Beispiel 17 erhaltene Natriumbisphenolat-Lösung zur Herstellung eines durch Zusatz weniger ppm blauer oder violetter organischer Farbstoffe gebläuten Copolycarbonats mit einer relativen Lösungsviskosität von 1,294 nach dem Phasengrenzflächenprozeß eingesetzt. Die Lichtdurchlässigkeit (Transmission, ASTM D 1003) des resultierenden Polycarbonats beträgt 87,9%

### Vergleichsbeispiel 21

Analog Beispiel 19 wird die in Vergleichsbeispiel 18 erhaltene Natriumbisphenolat-Lösung zur Herstellung eines durch Zusatz weniger ppm blauer oder violetter organischer Farbstoffe gebläuten Copolycarbonats mit einer relativen Lösungsviskosität von 1,296 nach dem Phasengrenzflächenprozeß eingesetzt. Die Lichtdurchlässigkeit (Transmission, ASTM D 1003) des resultierenden Polycarbonats beträgt 87,0%

Die in den Beispielen 16, 17, 19 und 20 hergestellten höher wärmeformbeständigen Copolycarbonate sind besonders geeignet zur Herstellung von äußeren und inneren Streuscheiben für Automobil-Reflektoren, bei denen gute Lichttransmission eine entscheidende Anforderung ist.

### Beispiel 22

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengebracht. Der gesamte Prozeß ist mit Stickstoff inertisiert. Die 6,5 %ige NaOH weist einen Sauerstoffgehalt von 10 ppb auf. Die Hazen-Farbzahl der resultierenden 15 %igen wäßrigen NaBPA beträgt 0,5 Hz. Diese NaBPA-Lösung wird zur Herstellung von Polycarbonat nach dem Phasengrenzflächenprozeß eingesetzt.

### Vergleichsbeispiel 23

Zur Herstellung von 1,022 t/h einer 15 %igen wäßrigen NaBPA-Lösung werden 867,5 kg/h 6,5 %ige NaOH und 154,5 kg/h BPA-Schmelze kontinuierlich zusammengebracht. Der gesamte Prozeß ist mit Stickstoff inertisiert. Die 6,5 %ige NaOH weist einen Sauerstoffgehalt von 250 ppb auf. Die Hazen-Farbzahl der resultierenden 15 %igen wäßrigen NaBPA beträgt 2 Hz. Diese NaBPA-Lösung wird zur Herstellung von Polycarbonat nach dem Phasengrenzflächenprozeß eingesetzt.

### Beispiel 24

Aus der in Beispiel 22 erhaltenen NaBPA-Lösung wurde ein Polycarbonat mit tert.-Butylphenol-Endgruppen und einer mittleren Viskositätszahl 40 (nach ISO 1628-1 gemessen) hergestellt. Dieses Polycarbonat wurde bei einer zulässigen Verarbeitungsfeuchte von 0,01% auf einer CD-Spritzgußmaschine vom Typ Netstal Discjet 600 zu CD-Rohlingen, die eine Dicke von 1,2 mm und einen Außendurchmesser von 120 mm aufweisen, verspritzt. Dabei wurde eine blanke Matrize ohne Pitstruktur verwendet.

Die Verarbeitung des Granulates zu CD-Rohlingen erfolgte bei unterschiedlichen Maschineneinstellungen:

### Einstellung 1:

Zylindertemperaturen:

| | | | |
|---|---|---|---|
| Einzug | Kompression | Zylinderkopf | Düse |
| 315°C | 320°C | 320°C | 320°C |

| | | | |
|---|---|---|---|
| maximale Einspritzgeschwindigkeit: 130 mm/sec | | | |

Werkzeug (Vorlauftemperatur): 55 °C
Zykluszeit: 4,6 sec

### Einstellung 2:

Zylindertemperaturen:

| | | | |
|---|---|---|---|
| Einzug | Kompression | Zylinderkopf | Düse |
| 315°C | 340°C | 350°C | 350°C |

| | | | |
|---|---|---|---|
| maximale Einspritzgeschwindigkeit: 110 mm/sec | | | |

Werkzeug (Vorlauftemperatur): 55 °C
Zykluszeit: 4,9 sec

Bei Einstellung 2 wurden außerdem CDs hergestellt, nachdem die Maschine für 5 Minuten angehalten worden war. Währenddessen wurde die Maschincneinstellung nicht verändert. Die dritte Platte nach Wiederanfahren der Spritzgußmaschine wurde für die Messungen entnommen. Diese Versuchseinstellung ist in den Tabellen als Einstellung 2 (5min Maschinenstopp) bezeichnet.

### Einstellung 3:

Zylindertemperaturen:

| | | | |
|---|---|---|---|
| Einzug | Kompression | Zylinderkopf | Düse |
| 315°C | 360°C | 380°C | 380°C |

| | | | |
|---|---|---|---|
| maximale Einspritzgeschwindigkeit: 100 mm/sec | | | |

Werkzeug (Vorlauftemperatur): 55 °C
Zykluszeit: 5,5 sec

Die erhaltenen CD-Rohlinge wurden anschließend einer farbmetrischen Bewertung unterzogen. Die Messung erfolgt im Bereich der CD auf dem Radius 40mm. Dabei wurden folgende Meßverfahren herangezogen:
1. Transmission (auf Basis der Normen ASTM E 308 / ASTM D 1003) Gerät: Pye-Unicam (Meßgeometrie: 0°/diffus, berechnet nach Lichtart C)
2. Yellownessindex YI nach ASTM E 313

### Vergleichsbeispiel 25

Aus der in Vergleichsbeispiel 23 erhaltenen NaBPA-Lösung wurde ein Polycarbonat mit tert-Butylphenol-Endgruppen und einer mittleren Viskositätszahl 40 (nach ISO 1628-1 gemessen) hergestellt.

Die in Beispiel 24 und Vergleichsbeispiel 25 erhaltenen Ergebnisse sind in den nachfolgenden Tabellen zusammengefaßt:

**Tabelle 1**

| **Transmission nach Einstellung 1 (320°C)** | | | | | | |
|---|---|---|---|---|---|---|
| Wellenlänge (nm) | 400 | 410 | 420 | 430 | 440 | 450 |
| Beispiel 24 | 88,18 | 88,47 | 88,72 | 88,89 | 89,09 | 89,24 |
| Vergleichsbeispiel 25 | 87,98 | 88,29 | 88,57 | 88,78 | 89,00 | 89,15 |

**Tabelle 2**

| **Transmission nach Einstellung 2 (350°C)** | | | | | | |
|---|---|---|---|---|---|---|
| Wellenlänge (nm) | 400 | 410 | 420 | 430 | 440 | 450 |
| Beispiel 24 | 88,28 | 88,56 | 88,81 | 88,98 | 89,18 | 89,31 |
| Vergleichsbeispiel 25 | 87,93 | 88,26 | 88,52 | 88,75 | 88,95 | 89,09 |

**Tabelle 3**

| **Transmission nach Einstellung 2 (5min Maschinenstopp)** | | | | | | |
|---|---|---|---|---|---|---|
| Wellenlänge (nm) | 400 | 410 | 420 | 430 | 440 | 450 |
| Beispiel 24 | 87,74 | 88,13 | 88,46 | 88,70 | 88,92 | 89,08 |
| Vergleichsbeispiel 25 | 87,51 | 87,92 | 88,26 | 88,53 | 88,76 | 88,93 |

**Tabelle 4**

| **Transmission nach Einstellung 3 (380°C)** | | | | | | |
|---|---|---|---|---|---|---|
| Wellenlänge (nm) | 400 | 410 | 420 | 430 | 440 | 450 |
| Beispiel 24 | 88,15 | 88,46 | 88,75 | 88,97 | 89,14 | 89,28 |
| Vergleichsbeispiel 25 | 87,93 | 88,27 | 88,57 | 88,81 | 89,00 | 89,14 |

**Tabelle 5**

| **Yellownessindex** | | | | |
|---|---|---|---|---|
| Einstellung | 1 (320°C) | 2 (350°C) | 2 (350°C/5min) | 3 (380°C) |
| Beispiel 24 | 0,85 | 0,83 | 1,01 | 0,87 |
| Vergleichsbeispiel 25 | 0,96 | 0,95 | 1,13 | 0,97 |

Die Ergebnisse zeigen, erfindungsgemäß hergestellten CDs höhere Transmissionswerte im blauen Spektralbereich, 400 und 450nm Wellenlänge, sowie niedrigere Yellonessindex-Werte besitzen als die Vergleichs-CDs.

Damit besitzen die erfindungsgemäßen CDs ein besseres Signal-Rauschverhältnis im Wellenlängenbereich von 400 bis 450 nm, was für optische Datenspeicher, die mit kurzwelligem Laserlicht beschrieben oder gelesen werden, von großer Bedeutung ist. Zudem ist die Lebensdauer der CD aufgrund geringerer Lichtabsorption des Materials höher.

## Patentansprüche

1. Polycarbonat, erhältlich durch Umsetzung von Phosgen mit einer Natriumbisphenolatlösung mit einem Gehalt an gelöstem Sauerstoff <150 ppb nach dem Phasengrenzflächenverfahren unter Sauerstoffausschluß.

2. Verfahren zur Herstellung von Polycarbonat nach dem Phasengrenzflächenverfahren, bei dem Phosgen mit einer Natrium-Bisphenolatlösung mit einem Gehalt an gelöstem Sauerstoff <150 ppb unter Sauerstoffausschluß umgesetzt wird.

3. Verfahren zur Herstellung von Natrium-Bisphenolatlösungen mit einem Gehalt an gelöstem Sauerstoff <150 ppb, bei dem Bisphenole mit einem Gehalt an gelösten Sauerstoff <10 ppb mit einer wäßrigen NaOH-Lösung mit einem Gehalt an gelöstem Sauerstoff <100 ppb unter Sauerstoffausschluß umgesetzt werden.

4. Substrate für optische Datenspeicher aus Polycarbonat, das erhältlich ist durch Umsetzung von Phosgen mit einer Natriumbisphenolat-Lösung mit einem Gehalt an gelöstem Sauerstoff <150 ppb nach dem Phasengrenzflächenverfahren unter Sauerstoffausschluß.

5. Optische Datenspeicher enthaltend ein Substrat gemäß Anspruch 1.

6. Verwendung der nach Anspruch 2 erhältlichen Polycarbonate zur Herstellung von Substraten für optische Datenspeicher.

7. Verwendung der Substrate nach Anspruch 4 zur Herstellung von optischen Datenspeichern.

## Claims

1. Polycarbonate, obtainable by conversion of phosgene with a sodium bisphenolate solution with a dissolved oxygen content of < 150 ppb by the phase interface process with exclusion of oxygen.

2. Process for the production of polycarbonate by the phase interface process, in which phosgene is converted with a sodium bisphenolate solution with a dissolved oxygen content of < 150 ppb with exclusion of oxygen.

3. Process for the production of sodium bisphenolate solutions with a dissolved oxygen content of < 150 ppb, in which bisphenols with a dissolved oxygen content of < 10 ppb are converted with an aqueous NaOH solution with a dissolved oxygen content of < 100 ppb with exclusion of oxygen.

4. Substrates for optical data storage media comprising polycarbonate which is obtainable by conversion of phosgene with a sodium bisphenolate solution with a dissolved oxygen content of < 150 ppb by the phase interface process with exclusion of oxygen.

5. Optical data storage media containing a substrate according to Claim 1.

6. Use of the polycarbonates obtainable according to Claim 2 for the production of substrates for optical data storage media.

7. Use of the substrates according to Claim 4 for the production of optical storage media.

## Revendications

1. Polycarbonate obtenu par réaction du phosgène avec une solution de bis-phénolate de sodium à une teneur en oxygène dissous < 150 ppb par le mode opératoire à l'interface de phases à l'abri de l'oxygène.

2. Procédé pour la préparation d'un polycarbonate par le mode opératoire à l'interface de phases dans lequel on fait réagir le phosgène avec une solution de bls-phénolate de sodium à une teneur en oxygène dissous < 150 ppb à l'abris de l'oxygène.

3. Procédé pour la préparation de solutions de bis-phénolates de sodium à une teneur en oxygène dissous < 150 ppb dans lequel on fait réagir des bis-phénols à une teneur en oxygène dissous < 10 ppb avec une solution aqueuse de NaOH à une teneur en oxygène dissous < 100 ppb à l'abri de l'oxygène.

4. Substrats pour enregistreurs de données optiques, consistant en un polycarbonate obtenu par réaction du phosgène avec une solution de bis-phénolate de sodium à une teneur en oxygène dissous < 150 ppb par le mode opératoire à l'interface de phases, à l'abri de l'oxygène.

5. Enregistreurs de données optiques contenant un substrat selon la revendication 1.

6. Utilisation des polycarbonates obtenus selon la revendication 2. pour la préparation de substrats pour enregistreurs de données optiques.

7. Utilisation des substrats selon la revendication 4 pour la préparation d'enregistreurs de données optiques.
